# EUROPEAN PATENT SPECIFICATION

(11) **EP 3 537 659 B1**
(45) Date of publication and mention of the grant of the patent: **02.12.2020**
(21) Application number: 17892744.8
(22) Date of filing: 20.01.2017
(51) Int. Cl.: H04L 12/24, H04B 10/27, H04Q 11/00

(54) **D-CCAP-BASED SERVICE PARAMETER CONFIGURATION METHOD AND DEVICE**
VERFAHREN UND VORRICHTUNG ZUR KONFIGURATION VON D-CCAP-BASIERTEN DIENSTPARAMETERN
PROCÉDÉ ET DISPOSITIF DE CONFIGURATION DE PARAMÈTRE DE SERVICE BASÉ SUR D-CCAP

(43) Date of publication of application: 11.09.2019
(73) Proprietor: Huawei Technologies Co., Ltd., Longgang District Shenzhen, Guangdong 518129 (CN)
(72) Inventor: KE, Bo, Shenzhen Guangdong 518129 (CN); LIU, Jiaxiang, Shenzhen Guangdong 518129 (CN)
(74) Representative: Gill Jennings & Every LLP
(86) International application number: PCT/CN2017/071944
(87) International publication number: WO 2018/133033

(56) References cited:
- EP-A1- 2 106 064
- CN-A- 101 247 258
- CN-A- 101 534 155
- CN-A- 102 104 420
- CN-A- 102 104 420
- CN-A- 102 868 545
- US-A1- 2008 253 771

## Description

### TECHNICAL FIELD

This application relates to the field of communications technologies, and in particular, to a service parameter configuration method based on a D-CCAP, and an apparatus.

### BACKGROUND

A distributed converged cable access platform (D-CCAP) is a distributed converged access platform of a multiple-system operator (MSO) access network, and supports a data service (for example, an Internet access service or a voice service) and a video service (for example, a digital television service, a video on demand (VoD) service, or a frequency modulation broadcast (FM) service).

The D-CCAP includes an element management system (EMS), a forwarding device, and a plurality of optical node devices. The forwarding device is connected to the plurality of optical node devices. The EMS is configured to: control and manage the forwarding device and the plurality of optical node devices, and perform service parameter configuration for the plurality of optical node devices. The forwarding device may be an optical line terminal (OLT) or a router, and is configured to process and forward data of various types of services that is sent by the EMS. The optical node device may be a coaxial media converter (CMC), and is configured to send received data to a plurality of playback devices (such as a set-top box or an intelligent terminal device).

Currently, an independent Internet protocol (IP) address is configured for each of the plurality of optical node devices in the D-CCAP. When performing service parameter configuration for the plurality of optical node devices, the EMS needs to perform service parameter configuration for each of the plurality of optical node devices. A specific process is as follows: The EMS encapsulates a service configuration parameter for an IP address of each optical node device into an IP packet, and separately sends encapsulated IP packets of the plurality of optical node devices to the forwarding device; and the forwarding device forwards a corresponding IP packet to the optical node device based on the IP address of each optical node device, so that the optical node device can perform configuration based on the service configuration parameter in the received IP packet.

With the development of services, the D-CCAP includes a large quantity of optical node devices, and the EMS applies the foregoing service parameter configuration method to each optical node device. As a result, a quantity of times of service parameter configuration performed by the EMS for the plurality of optical node devices increases, thereby consuming a relatively long time and causing relatively low service parameter configuration efficiency.

CN102104420 discloses a parameter configuring method, device and system for an ONT (Optical Network Terminal).

### SUMMARY

Embodiments of this application provide a service parameter configuration method based on a D-CCAP, and an apparatus, to resolve a prior-art problem of relatively low efficiency in service parameter configuration performed by an EMS for a large quantity of optical node devices. The scope of the invention is defined in the appended claims.

Specific technical solutions provided in this application are as follows:

According to a first aspect, an embodiment of this application provides a service parameter configuration method based on a D-CCAP, the method is applied to a D-CCAP, and the method includes:
determining, by an element management system, EMS, a service configuration parameter for an optical node device set, wherein the optical node device set comprises at least two optical node devices; sending, by the EMS, the service configuration parameter for the optical node device set to a forwarding device by encapsulating the service configuration parameter into an IP packet, configuring a destination IP address of the IP packet as the IP address of the forwarding device and sending the IP packet to the forwarding device; determining, by the forwarding device based on a connection relationship between a local port and each optical node device, a target port connected to each of the at least two optical node device; and sending, by the forwarding device, the service configuration parameter to each of the at least two optical node device through the determined target port connected to the optical node device.

In the foregoing method, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

In a possible design, the service configuration parameter may be but is not limited to a service name, a user name, a password, output power, channel configuration information, or the like.

In a possible design, the EMS may determine the service configuration parameter for the optical node device set in the following two manners:

In a first manner, the EMS determines a plurality of optical node device sets based on service types, and determines, as one optical node device set, at least one optical node device that provides a same type of service. For example, the EMS determines, as the optical node device set, at least one optical node device that provides a digital television service (or a VoD service, or an FM broadcast service). Alternatively, the EMS may determine, as the optical node device set based on different areas of a same type of service, at least one optical node device that provides the service in a same area. For example, the EMS determines, as the optical node device set, at least one optical node device that provides a VoD service in an A area (or a B area).

The EMS determines a service configuration parameter for each optical node device set based on a service requirement. For example, when an optical node device set requires a VoD service, the EMS determines that a service configuration parameter for the optical node device set is a VoD service parameter.

In a second manner, the EMS obtains the stored service configuration parameter for the optical node device set.

In the foregoing method, the EMS determines the service configuration parameter for the optical node device set. In this way, the EMS can perform service parameter configuration for the at least one optical node device in the optical node device set, instead of performing service parameter configuration for the at least one optical node device one by one, thereby reducing a quantity of service parameter configuration times, shortening a consumed time, and improving service parameter configuration efficiency.

In a possible design, after determining the plurality of optical node device sets based on the foregoing design, the EMS sends information about the optical node device sets to the forwarding device, where the information about the optical node device sets includes a correspondence between each optical node device set and included at least one optical node device.

In the foregoing method, after receiving the service configuration parameter that is sent by the EMS for the optical node device set, the forwarding device may determine a target optical node device based on the information about the optical node device sets, and send the service configuration parameter to the target optical node device.

In a possible design, an IP address of the forwarding device is configured in the EMS, an IP address of the EMS is configured in the forwarding device, and the EMS and the forwarding device may communicate by establishing a connection by using the configured IP addresses. When sending the service configuration parameter to the forwarding device, the EMS encapsulates the service configuration parameter into an IP packet, configures a destination IP address of the IP packet as the IP address of the forwarding device, and finally sends the IP packet to the forwarding device.

In the foregoing method, the EMS successfully and accurately sends the service configuration parameter to the forwarding device.

In a possible design, after sending the service configuration parameter for the optical node device set to the forwarding device, the EMS receives a running data file sent by the forwarding device, where the data file includes running data of a plurality of optical node devices.

In the foregoing method, the EMS may receive the running data centrally reported by the forwarding device. This resolves a prior-art problem that the EMS collects the running data of all of the optical node devices one by one, thereby improving running data collection efficiency and service monitoring performance.

In the foregoing method, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

In a possible design, the forwarding device may send the service configuration parameter to each of the at least one optical node device in the following steps:
determining, by the forwarding device based on a connection relationship between a local port and each optical node device, a target port connected to each of the at least one optical node device; and
sending, by the forwarding device, the service configuration parameter to a optical node device through the determined target port connected to the optical node device.

In the foregoing method, a service configuration parameter is transmitted between the forwarding device and each optical node device by using a corresponding port, and the service configuration parameter does not need to be transmitted by using an independent IP address of each optical node device. Apparently, the EMS does not need to configure an IP address for the optical node device. This resolves a problem that IP address resources are limited due to excessively large consumption of IP addresses, thereby saving the IP address resources.

In a possible design, after the forwarding device sends the service configuration parameter to each of the at least one optical node device, the method further includes:
obtaining, by the forwarding device, running data of a plurality of optical node devices, where the running data of the plurality of optical node devices includes running data of a plurality of types of services on each of the plurality of optical node devices, for example, running data of a digital television service, a VoD service, and an FM broadcast service;
generating, by the forwarding device, a running data file that includes the running data of the plurality of optical node devices; and
sending, by the forwarding device, the running data file to the EMS.

In the foregoing method, the forwarding device centrally reports the running data to the EMS. This resolves a prior-art problem that the EMS collects the running data of all of the optical node devices one by one, thereby improving running data collection efficiency and service monitoring performance.

In a possible design, the forwarding device may obtain the running data of the plurality of optical node devices in the following three manners:

In a first manner, after receiving an instruction that is delivered by the EMS for obtaining the running data, the forwarding device actively obtains the running data of the plurality of optical node devices. For example, when the user needs to monitor the running data of the plurality of optical node devices by using the EMS, the EMS delivers the instruction for obtaining the running data to the forwarding device, so that the forwarding device actively obtains the running data of the plurality of optical node devices.

In a second manner, the forwarding device actively obtains the running data of the plurality of optical node devices according to a first specified period.

In a third manner, the forwarding device receives the running data that is reported by the plurality of optical node devices according to a second specified period.

In the foregoing method, the forwarding device may accurately obtain the running data of the plurality of optical node devices in a plurality of manners.

In a possible design, the forwarding device generates the running data file that includes the running data of the plurality of optical node devices. A specific method may be as follows:

The forwarding device performs classification and integration processing on the running data to obtain processed running data. For example, the forwarding device performs classification processing on the running data of the plurality of optical node devices based on different service types, and then, integrates the running data of all the optical node devices that provide a same type of service.

The forwarding device generates the running data file that includes the processed running data. A format of the running data file may be a specified file format, and the specified format may be a format agreed on by the EMS and the forwarding device based on a service requirement.

In the foregoing method, after the EMS receives the processed running data, running statuses of the plurality of optical node devices may be directly perceived, thereby improving monitoring performance.

In a possible design, the sending, by the forwarding device, the running data file to the EMS may specifically include the following two cases:

In a first case, after receiving an instruction for obtaining running data, the forwarding device sends the data file to the EMS.

In a second case, the forwarding device sends the data file to the EMS according to a third specified period.

In the foregoing method, the forwarding device may relatively flexibly send the data file to the EMS.

According to a third aspect, an embodiment of this application further provides distributed converged cable access platform, D-CCAP, comprising an element management system, EMS (300), a forwarding device (400), and an optical node device set the EMS (300), comprising a processing unit, configured to determine a service configuration parameter for the optical node device set, wherein the optical node device set comprises at least two optical node device; and a sending unit, configured to send the service configuration parameter for the optical node device set to the forwarding device by encapsulating the service configuration parameter into an IP packet, configuring a destination IP address of the IP packet as the IP address of the forwarding device and sending the IP packet to the forwarding device; the forwarding device configured to determine, based on a connection relationship between a local port and each optical node device, a target port connected to each of the at least two optical node device; and send the service configuration parameter to a optical node device through the determined target port connected to the optical node device.

In a possible design, a structure of the EMS includes a processing unit and a sending unit, and the units may perform corresponding functions in the foregoing method designs. For details, refer to detailed descriptions in the method designs. Details are not described herein again.

In a possible design, a structure of the EMS includes a transceiver, a processor, a bus, and a memory, where the transceiver is configured to perform communication interaction with another device in a D-CCAP, and the processor is configured to support the EMS to perform a corresponding function in the foregoing methods. The memory is coupled to the processor, and the memory stores a program instruction and data that are necessary for the EMS.

In a possible design, a structure of the forwarding device includes a receiving unit, a processing unit, and a sending unit, and the units may perform corresponding functions in the foregoing method designs. For details, refer to detailed descriptions in the method designs. Details are not described herein again.

In a possible design, a structure of the forwarding device includes a transceiver, a processor, a bus, and a memory, where the transceiver is configured to perform communication interaction with another device in a D-CCAP, and the processor is configured to support the forwarding device to perform a corresponding function in the foregoing methods. The memory is coupled to the processor, and the memory stores a program instruction and data that are necessary for the forwarding device.

In the embodiments of this application, the EMS determines the service configuration parameter for the optical node device set, where the optical node device set includes at least one optical node device; and sends the service configuration parameter for the optical node device set to the forwarding device, so that the forwarding device sends the service configuration parameter to each of the at least one optical node device. In the method, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

### BRIEF DESCRIPTION OF DRAWINGS

FIG 1 shows a D-CCAP according to an embodiment of this application;
FIG. 2 is a flowchart of a service parameter configuration method based on a D-CCAP according to an embodiment of this application;
FIG. 3 is a schematic structural diagram of an EMS according to an embodiment of this application;
FIG. 4 is a schematic structural diagram of a forwarding device according to an embodiment of this application;
FIG. 5 is a structural diagram of an EMS according to an embodiment of this application; and
FIG. 6 is a structural diagram of a forwarding device according to an embodiment of this application.

### DESCRIPTION OF EMBODIMENTS

To make the objectives, technical solutions, and advantages of this application clearer, the following further describes this application in detail with reference to the accompanying drawings.

The embodiments of this application provide a service parameter configuration method based on a D-CCAP, and an apparatus, to resolve the following prior-art problem: Because a D-CCAP includes a large quantity of optical node devices, and the EMS performs service parameter configuration for all of the optical node devices one by one, a quantity of times of service parameter configuration performed by the EMS for the plurality of optical node devices increases, thereby consuming a relatively long time and causing relatively low service parameter configuration efficiency. The method and the apparatus are conceived based on a same invention. The method and the apparatus have similar principles for resolving the problem. Therefore, for implementation of the apparatus and the method, reference may be made to each other, and details of repeated parts are not described.

In the technical solutions of the embodiments of this application, an EMS determines a service configuration parameter for an optical node device set, where the optical node device set includes at least one optical node device; and sends the service configuration parameter for the optical node device set to a forwarding device, so that the forwarding device sends the service configuration parameter to each of the at least one optical node device. In the method, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

In the following, some terms in this application are described and explained, to help a person skilled in the art have a better understanding.
(1) The EMS related in the embodiments of this application is used to: control and manage a forwarding device and a plurality of optical node devices; and perform service parameter configuration for the plurality of optical node devices, and the like.
(2) The forwarding device related in the embodiments of this application is configured to process and forward data of various types of services that is sent by the EMS. For example, the forwarding device sends, to the plurality of optical node devices, the received service configuration parameter sent by the EMS. The forwarding device may be but is not limited to an OLT, a router, or the like.
(3) The optical node device related in the embodiments of this application is configured to send the received data to a plurality of playback devices (such as a set top box or an intelligent terminal device), and perform configuration based on the received service configuration parameter sent by the forwarding device. The optical node device may be but is not limited to a CMC or the like.
(4) "A plurality of" related in the embodiments of this application means "two or more".
(5) In the description of this application, words such as "first" and "second" are merely used for distinction and description, and shall not be understood as an indication or implication of relative importance or an indication or implication of an order.

To more clearly describe the technical solutions in the embodiments of this application, with reference to the accompanying drawings, the following describes a service parameter configuration method based on a D-CCAP, and an apparatus in detail that are provided in the embodiments of this application.

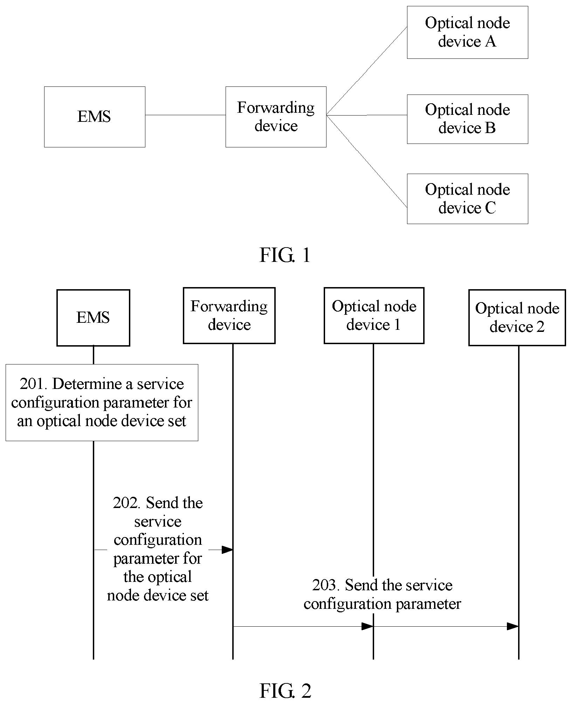

FIG. 1 shows a possible D-CCAP applicable to a service parameter configuration method based on a D-CCAP according to an embodiment of this application. An architecture of the D-CCAP includes: an EMS, a forwarding device, and at least one optical node device.

The EMS is configured to: determine a plurality of optical node device sets, determine a service configuration parameter for each optical node device set, and send the service configuration parameter for each optical node device set to the forwarding device. Each optical node device set includes at least one optical node device. For example, an optical node device set may include an optical node device A and an optical node device B shown in FIG. 1, and another optical node device set may include the optical node device A and an optical node device C shown in FIG. 1.

The forwarding device is configured to: receive the service configuration parameter that is sent by the EMS for any optical node device set, and then, send the service configuration parameter to each optical node device in the optical node device set. For example, when the optical node device set includes the optical node device A and the optical node device B shown in FIG. 1, the forwarding device sends the service configuration parameter separately to the optical node device A and the optical node device B.

The at least one optical node device is configured to complete service parameter configuration of itself based on the received corresponding service configuration parameter sent by the forwarding device.

In the foregoing D-CCAP, the EMS performs service parameter configuration for the optical node device set, and the at least one optical node device in the optical node device set may share the service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

The service parameter configuration method based on a D-CCAP provided in the embodiments of this application is applicable to the D-CCAP shown in FIG. 1. Referring to FIG. 2, a specific procedure of the method includes the following steps:

Step 201: An EMS determines a service configuration parameter for an optical node device set, where the optical node device set includes at least one optical node device.

The service configuration parameter may be but is not limited to a service name, a user name, a password, output power, channel configuration information, or the like.

Optionally, when performing step 201, the EMS may determine the service configuration parameter for the optical node device set in the following two manners:

In a first manner, the EMS determines a plurality of optical node device sets based on service types, and determines, as one optical node device set, at least one optical node device that provides a same type of service. For example, the EMS determines, as the optical node device set, at least one optical node device that provides a digital television service (or a VoD service, or an FM broadcast service). Alternatively, the EMS may determine, as the optical node device set based on different areas of a same type of service, at least one optical node device that provides the service in a same area. For example, the EMS determines, as the optical node device set, at least one optical node device that provides a VoD service in an A area (or a B area).

The EMS determines a service configuration parameter for each optical node device set based on a service requirement. For example, when an optical node device set requires a VoD service, the EMS determines that a service configuration parameter for the optical node device set is a VoD service parameter.

In a second manner, the EMS obtains the stored service configuration parameter for the optical node device set.

In the foregoing method, the EMS determines the service configuration parameter for the optical node device set. In this way, the EMS can perform service parameter configuration for the at least one optical node device in the optical node device set, instead of performing service parameter configuration for the at least one optical node device one by one, thereby reducing a quantity of service parameter configuration times, shortening a consumed time, and improving service parameter configuration efficiency.

Optionally, in the foregoing first manner, after determining the plurality of optical node device sets, the EMS sends information about the optical node device sets to the forwarding device, where the information about the optical node device sets includes a correspondence between each optical node device set and included at least one optical node device.

Step 202: The EMS sends the service configuration parameter for the optical node device set to a forwarding device, so that the forwarding device sends the service configuration parameter to each of the at least one optical node device.

An IP address of the forwarding device is configured in the EMS, an IP address of the EMS is configured in the forwarding device, and the EMS and the forwarding device may communicate by establishing a connection by using the configured IP addresses. When sending the service configuration parameter to the forwarding device, the EMS may encapsulate the service configuration parameter into an IP packet, configure a destination IP address of the IP packet as the IP address of the forwarding device, and finally send the IP packet to the forwarding device.

Step 203: The forwarding device sends the service configuration parameter to each of the at least one optical node device.

Optionally, after receiving the service configuration parameter that is sent by the EMS for the optical node device set, the forwarding device determines a target optical node device based on the information about the optical node device sets, and sends the service configuration parameter to the target optical node device.

Because a connection relationship between each optical node device and a local port is maintained in the forwarding device, optionally, the forwarding device performs step 203 in the following two steps:
a. The forwarding device determines, based on the connection relationship between a local port and each optical node device, a target port connected to each of the at least one optical node device.
b. The forwarding device sends the service configuration parameter to the optical node device through the determined target port connected to the optical node device.

In step b, after each optical node device is started, the forwarding device may send the service configuration parameter to the optical node device through the target port connected to the optical node device.

In the foregoing method, a service configuration parameter is transmitted between the forwarding device and each optical node device by using a corresponding port, and the service configuration parameter does not need to be transmitted by using an independent IP address of each optical node device. Apparently, the EMS does not need to configure an IP address for the optical node device. This resolves a problem that IP address resources are limited due to excessively large consumption of IP addresses, thereby saving the IP address resources.

Optionally, after performing step 203, the forwarding device further performs the following three steps:
a1. The forwarding device obtains running data of a plurality of optical node devices, where the running data of the plurality of optical node devices includes running data of a plurality of types of services on each of the plurality of optical node devices, for example, running data of a digital television service, a VoD service, and an FM broadcast service.
b1. The forwarding device generates a running data file that includes the running data of the plurality of optical node devices.
c1. The forwarding device sends the running data file to the EMS.

In the foregoing method, the forwarding device centrally reports the running data to the EMS. This resolves a prior-art problem that the EMS collects the running data of all of the optical node devices one by one, thereby improving running data collection efficiency and service monitoring performance.

Optionally, the forwarding device may perform step a1 in the following three manners:

In a first manner, after receiving an instruction that is delivered by the EMS for obtaining the running data, the forwarding device actively obtains the running data of the plurality of optical node devices. For example, when the user needs to monitor the running data of the plurality of optical node devices by using the EMS, the EMS delivers the instruction for obtaining the running data to the forwarding device, so that the forwarding device actively obtains the running data of the plurality of optical node devices.

In a second manner, the forwarding device actively obtains the running data of the plurality of optical node devices according to a first specified period.

In a third manner, the forwarding device receives the running data that is reported by the plurality of optical node devices according to a second specified period.

When reporting the running data, the plurality of optical node devices may send running data of a specified quantity of optical node devices, or may send running data of a specified type of service on the plurality of optical node devices.

Optionally, when the forwarding device performs step b1, a specific method may be as follows:

The forwarding device performs classification and integration processing on the running data to obtain processed running data. For example, the forwarding device performs classification processing on the running data of the plurality of optical node devices based on different service types, and then, integrates the running data of all the optical node devices that provide a same type of service. In this way, after the EMS receives the processed running data, running statuses of the plurality of optical node devices may be directly perceived, thereby improving monitoring performance.

The forwarding device generates a running data file that includes the processed running data. A format of the running data file may be a specified file format, and the specified format may be a format agreed on by the EMS and the forwarding device based on a service requirement.

Optionally, when the forwarding device performs step c1, specifically, there may be the following two cases:

In a first case, after receiving an instruction for obtaining running status data, the forwarding device sends the data file to the EMS.

In a second case, the forwarding device sends the data file to the EMS according to a third specified period.

Optionally, when data interaction is performed between the EMS and the forwarding device, a setting interface may be set between the EMS and the forwarding device, so that the EMS transmits agreed data to the forwarding device by using the setting interface. For example, the EMS transmits the service configuration parameter to the forwarding device, and the forwarding device transmits the running data file to the EMS. In this way, data interaction between the EMS and the forwarding device may be convenient, and the following scenario is avoided: Interaction between the EMS and the forwarding device is difficult when the EMS and the forwarding device are from different manufacturers or in different specifications.

In the service parameter configuration method based on a D-CCAP provided in this embodiment of this application, the EMS determines the service configuration parameter for the optical node device set, where the optical node device set includes the at least one optical node device; and sends the service configuration parameter for the optical node device set to the forwarding device, so that the forwarding device sends the service configuration parameter to each of the at least one optical node device. In the method, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

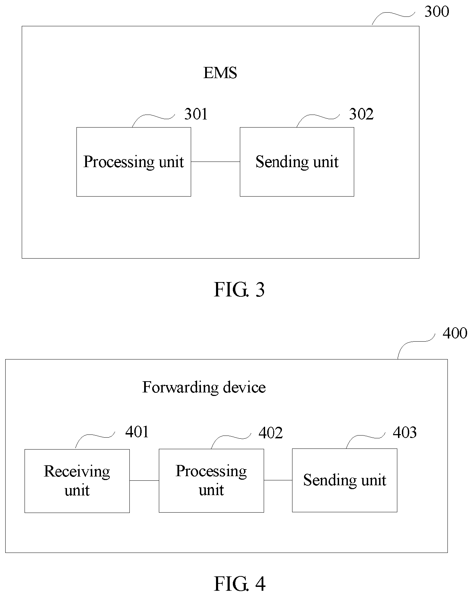

Based on the foregoing embodiments, an embodiment of this application further provides an EMS. The EMS is applied to the D-CCAP shown in FIG. 1, and is used to implement the service parameter configuration method based on a D-CCAP shown in FIG. 2. As shown in FIG. 3, an EMS 300 includes a processing unit 301 and a sending unit 302.

The processing unit 301 is configured to determine a service configuration parameter for an optical node device set, where the optical node device set includes at least one optical node device.

The sending unit 302 is configured to send the service configuration parameter for the optical node device set to a forwarding device, so that the forwarding device sends the service configuration parameter to each of the at least one optical node device.

Optionally, when determining the service configuration parameter for the optical node device set, the processing unit 301 is specifically configured to:
determine the optical node device set based on a service type; and
determine the service configuration parameter for the optical node device set based on a service requirement.

Optionally, the EMS 300 further includes:
a receiving unit, configured to: after the sending unit 302 sends the service configuration parameter for the optical node device set to the forwarding device, receive a running data file sent by the forwarding device, where the data file includes running data of a plurality of optical node devices.

The EMS provided in this embodiment of this application determines the service configuration parameter for the optical node device set, where the optical node device set includes at least one optical node device; and sends the service configuration parameter for the optical node device set to the forwarding device, so that the forwarding device sends the service configuration parameter to each of the at least one optical node device. In this way, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

Based on the foregoing embodiments, an embodiment of this application further provides a forwarding device. The forwarding device is applied to the D-CCAP shown in FIG. 1, and is configured to implement the service parameter configuration method based on a D-CCAP shown in FIG. 2. Referring to FIG. 4, a forwarding device 400 includes a receiving unit 401, a processing unit 402, and a sending unit 403.

The receiving unit 401 is configured to receive a service configuration parameter that is sent by an EMS for an optical node device set, where the optical node device set includes at least one optical node device.

The processing unit 402 is configured to control the sending unit 403 to send the service configuration parameter to each of the at least one optical node device.

The sending unit 403 is configured to send the service configuration parameter to each of the at least one optical node device.

Optionally, the processing unit 402 is specifically configured to:
determine, based on a connection relationship between a local port and each optical node device, a target port connected to each of the at least one optical node device; and
control the sending unit 403 to send the service configuration parameter to a optical node device through the determined target port connected to the optical node device.

Optionally, the receiving unit 401 is further configured to:
after the sending unit 403 sends the service configuration parameter to each of the at least one optical node device, obtain running data of a plurality of optical node devices.

The processing unit 402 is further configured to:
generate a running data file that includes the running data of the plurality of optical node devices; and
control the sending unit 403 to send the running data file to the EMS.

The sending unit 403 is further configured to send the running data file to the EMS.

The forwarding device provided in this embodiment of this application receives the service configuration parameter that is sent by the EMS for the optical node device set, and then, sends the service configuration parameter to each of at least one optical node device included in the optical node device set. In this way, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

It should be noted that unit division in the embodiments of this application is an example and is merely logical function division. During actual implementation, there may be another division manner. Functional units in the embodiments of this application may be integrated into one processing unit, or each of the units may exist alone physically, or two or more units are integrated into one unit. The foregoing integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, a network device, or the like) or a processor to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM), a magnetic disk, or an optical disc.

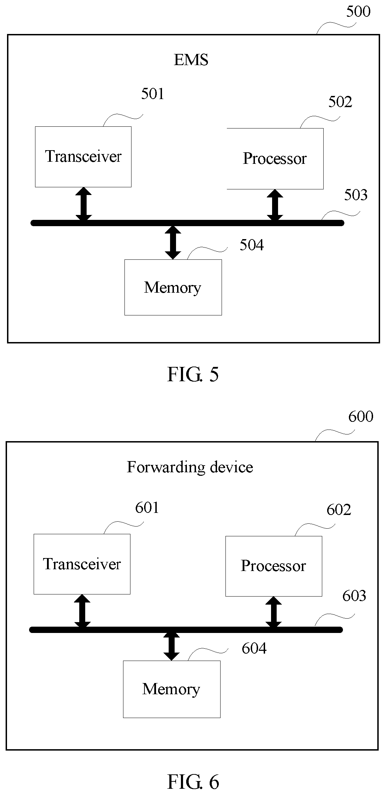

Based on the foregoing embodiments, an embodiment of this application further provides an EMS. The EMS is applied to the D-CCAP shown in FIG. 1. The D-CCAP further includes a forwarding device. Referring to FIG. 5, an EMS 500 includes a transceiver 501, a processor 502, a bus 503, and a memory 504.

The transceiver 501, the processor 502, and the memory 504 are connected to each other by using the bus 503. The bus 503 may be a Peripheral Component Interconnect (PCI) bus, an extended industry standard architecture (EISA) bus, or the like. The bus may be classified into an address bus, a data bus, a control bus, and the like. For ease of representation, only one thick line is used to represent the bus in FIG. 5, but this does not mean that there is only one bus or only one type of bus.

The transceiver 501 is configured to perform communication interaction with another device, in the D-CCAP, connected to the EMS 500.

The processor 502 is configured to implement the service parameter configuration method based on a D-CCAP shown in FIG. 2. The service parameter configuration method based on a D-CCAP includes:
determining a service configuration parameter for an optical node device set, where the optical node device set includes at least one optical node device; and
sending the service configuration parameter for the optical node device set to a forwarding device, so that the forwarding device sends the service configuration parameter to each of the at least one optical node device.

Optionally, when determining the service configuration parameter for the optical node device set, the processor 502 is specifically configured to:
determine the optical node device set based on a service type; and
determine the service configuration parameter for the optical node device set based on a service requirement.

Optionally, the processor 502 is further configured to:
after the service configuration parameter for the optical node device set is sent to the forwarding device, receive a running data file sent by the forwarding device, where the data file includes running data of a plurality of optical node devices.

The memory 504 is configured to store a program and the like. Specifically, the program may include program code, and the program code includes a computer operation instruction. The memory 504 may include a RAM, and may further include a non-volatile memory such as at least one magnetic disk memory. The processor 502 executes the application program stored in the memory 504, to implement the foregoing function, so as to implement the service parameter configuration method based on a D-CCAP shown in FIG. 2.

The EMS provided in this embodiment of this application determines the service configuration parameter for the optical node device set, where the optical node device set includes at least one optical node device; and sends the service configuration parameter for the optical node device set to the forwarding device, so that the forwarding device sends the service configuration parameter to each of the at least one optical node device. In this way, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

Based on the foregoing embodiments, an embodiment of this application further provides a forwarding device. The forwarding device is applied to the D-CCAP shown in FIG. 1. The D-CCAP further includes an EMS. Referring to FIG. 6, a forwarding device 600 includes a transceiver 601, a processor 602, a bus 603, and a memory 604.

The transceiver 601, the processor 602, and the memory 604 are connected to each other by using the bus 603. The bus 603 may be a Peripheral Component Interconnect (PCI) bus, an extended industry standard architecture (EISA) bus, or the like. The bus may be classified into an address bus, a data bus, a control bus, and the like. For ease of representation, only one thick line is used to represent the bus in FIG. 6, but this does not mean that there is only one bus or only one type of bus.

The transceiver 601 is configured to perform communication interaction with another device, in the D-CCAP, connected to the forwarding device 600.

The processor 602 is configured to implement the service parameter configuration method based on a D-CCAP shown in FIG. 2. The service parameter configuration method based on a D-CCAP includes:
receiving a service configuration parameter that is sent by an EMS for an optical node device set, where the optical node device set includes at least one optical node device; and then, sending the service configuration parameter to each of at least one optical node device included in the optical node device set.

Optionally, when the service configuration parameter is sent to each of the at least one optical node device, the processor 602 is specifically configured to:
determine, based on a connection relationship between a local port and each optical node device, a target port connected to each of the at least one optical node device; and
send the service configuration parameter to a optical node device through the determined target port connected to the optical node device.

Optionally, the processor 602 is further configured to:
after the service configuration parameter is sent to each of the at least one optical node device, obtain running data of a plurality of optical node devices;
generate a running data file that includes the running data of the plurality of optical node devices; and
send the running data file to the EMS.

The memory 604 is configured to store a program and the like. Specifically, the program may include program code, and the program code includes a computer operation instruction. The memory 604 may include a RAM, and may further include a non-volatile memory such as at least one magnetic disk memory. The processor 602 executes the application program stored in the memory 604, to implement the foregoing function, so as to implement the service parameter configuration method based on a D-CCAP shown in FIG. 2.

The forwarding device provided in this embodiment of this application receives the service configuration parameter that is sent by the EMS for the optical node device set, and then, sends the service configuration parameter to each of at least one optical node device included in the optical node device set. In this way, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

In conclusion, according to the service parameter configuration method based on a D-CCAP, and the apparatus that are provided in the embodiments of this application, the EMS determines the service configuration parameter for the optical node device set, where the optical node device set includes the at least one optical node device; and sends the service configuration parameter for the optical node device set to the forwarding device, so that the forwarding device sends the service configuration parameter to each of the at least one optical node device. In the method, the at least one optical node device in the optical node device set may share a service configuration parameter. In this way, the EMS does not need to perform service parameter configuration for all of a large quantity of optical node devices one by one, thereby reducing a quantity of service parameter configuration times, shortening a consumed time, and improving service parameter configuration efficiency.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Apparently, a person skilled in the art can make various modifications and variations to the embodiments of this application without departing from the scope of the embodiments of the present invention. This application is intended to cover these modifications and variations provided that they fall within the scope of protection defined by the following claims.

## Claims

1. A service parameter configuration method based on a distributed converged cable access platform, D-CCAP, comprising:
determining, by an element management system, EMS (300), a service configuration parameter for an optical node device set, wherein the optical node device set comprises at least two optical node devices;
sending, by the EMS (300), the service configuration parameter for the optical node device set to a forwarding device (400) by encapsulating the service configuration parameter into an IP packet, configuring a destination IP address of the IP packet as the IP address of the forwarding device (400) and sending the IP packet to the forwarding device (400);
determining, by the forwarding device (400) based on a connection relationship between a local port and each optical node device, a target port connected to each of the at least two optical node device; and
sending, by the forwarding device (400), the service configuration parameter to each of the at least two optical node device through the determined target port connected to the optical node devices..

2. The method according to claim 1, wherein the determining, by an EMS (300), a service configuration parameter for an optical node device set comprises:
determining, by the EMS (300), the optical node device set based on a service type, wherein each optical node device in the optical node device set provides a same type of service; and
determining, by the EMS (300), the service configuration parameter for the optical node device set based on a service requirement.

3. The method according to claim 1 or 2, wherein after the sending, by the EMS (300), the service configuration parameter for the optical node device set to a forwarding device (400), the method further comprises:
receiving, by the EMS (300), a running data file sent by the forwarding device (400), wherein the data file comprises running data of a plurality of optical node devices.

4. The method according to any of claims 1 to 3, wherein after the sending, by the forwarding device (400), the service configuration parameter to each of the at least two optical node device, the method further comprises:
obtaining, by the forwarding device (400), running data of a plurality of optical node devices;
generating, by the forwarding device (400), a running data file that comprises the running data of the plurality of optical node devices; and
sending, by the forwarding device (400), the running data file to the EMS (300).

5. A distributed converged cable access platform, D-CCAP, comprising an element management system, EMS (300), a forwarding device (400), and an optical node device set, the EMS (300), comprising:
a processing unit (301), configured to determine a service configuration parameter for the optical node device set, wherein the optical node device set comprises at least two optical node device; and
a sending unit (302), configured to send the service configuration parameter for the optical node device set to the forwarding device (400) by encapsulating the service configuration parameter into an IP packet, configuring a destination IP address of the IP packet as the IP address of the forwarding device (400) and sending the IP packet to the forwarding device (400); the forwarding device (400) configured to:
determine, based on a connection relationship between a local port and each optical node device, a target port connected to each of the at least two optical node device; and
send the service configuration parameter to a optical node device through the determined target port connected to the optical node device.

6. The D-CCAP according to claim 5, wherein when determining the service configuration parameter for the optical node device set, the processing unit (301) of the EMS (300) is specifically configured to:
determine the optical node device set based on a service type, wherein each optical node device in the optical node device set provides a same type of service; and
determine the service configuration parameter for the optical node device set based on a service requirement.

7. The D-CCAP according to claim 5 or 6, the EMS (300) further comprising:
a receiving unit, configured to: after the sending unit (302) sends the service configuration parameter for the optical node device set to the forwarding device (400), receive a running data file sent by the forwarding device (400), wherein the data file comprises running data of a plurality of optical node devices.

8. The D-CCAP according to claim 5 or 6, wherein the forwarding device (400) is further configured to:
after sending the service configuration parameter to each of the at least two optical node device, obtain running data of a plurality of optical node devices;
generate a running data file that comprises the running data of the plurality of optical node devices; and
control the sending unit to send the running data file to the EMS (300).

## Patentansprüche

1. Dienstparameterkonfigurationsverfahren basierend auf einer Distributed Converged Cable Access Platform (D-CCAP), Folgendes umfassend:
Bestimmen, durch ein Elementverwaltungssystem (EMS) (300), eines Dienstkonfigurationsparameters für einen Satz optischer Knotenvorrichtungen, wobei der Satz optischer Knotenvorrichtungen mindestens zwei optische Knotenvorrichtungen umfasst;
Senden, durch das EMS (300), des Dienstkonfigurationsparameters für den Satz optischer Knotenvorrichtungen an eine Weiterleitungsvorrichtung (400) durch Einkapseln des Dienstkonfigurationsparameters in ein IP-Paket, Konfigurieren einer Ziel-IP-Adresse des IP-Pakets als IP-Adresse der Weiterleitungsvorrichtung (400) und Senden des IP-Pakets an die Weiterleitungsvorrichtung (400);
Bestimmen, durch die Weiterleitungsvorrichtung (400), basierend auf einer Verbindungsbeziehung zwischen einem lokalen Port und jeder optischen Knotenvorrichtung, eines Zielports, der mit jeder der mindestens zwei optischen Knotenvorrichtungen verbunden ist; und
Senden, durch die Weiterleitungsvorrichtung (400), des Dienstkonfigurationsparameters an jede der mindestens zwei optischen Knotenvorrichtungen über den bestimmten Zielport, der mit den optischen Knotenvorrichtungen verbunden ist.

2. Verfahren nach Anspruch 1, wobei das Bestimmen eines Dienstkonfigurationsparameters für einen Satz optischer Knotenvorrichtungen durch ein EMS (300) Folgendes umfasst:
Bestimmen, durch das EMS (300), des Satzes optischer Knotenvorrichtungen basierend auf einem Diensttyp, wobei jede optische Knotenvorrichtung in dem Satz optischer Knotenvorrichtungen einen gleichen Diensttyp bereitstellt; und
Bestimmen, durch das EMS (300), des Dienstkonfigurationsparameters für den Satz optischer Knotenvorrichtungen basierend auf einer Dienstanforderung.

3. Verfahren nach Anspruch 1 oder 2, wobei nach dem Senden, durch das EMS (300), der Dienstkonfigurationsparameter für den Satz optischer Knotenvorrichtungen an eine Weiterleitungsvorrichtung (400), das Verfahren ferner Folgendes umfasst:
Empfangen, durch das EMS (300), einer Laufzeitdatendatei, die von der Weiterleitungsvorrichtung (400) gesendet wird, wobei die Datendatei Laufzeitdaten mehrerer optischer Knotenvorrichtungen umfasst.

4. Verfahren nach einem der Ansprüche 1 bis 3, wobei nach dem Senden, durch die Weiterleitungsvorrichtung (400), des Dienstkonfigurationsparameters an jede der mindestens zwei optischen Knotenvorrichtungen das Verfahren ferner Folgendes umfasst:
Beschaffen, durch die Weiterleitungsvorrichtung (400), von Laufzeitdaten mehrerer optischer Knotenvorrichtungen;
Erzeugen, durch die Weiterleitungsvorrichtung (400), einer Laufzeitdatendatei, die die Laufzeitdaten der mehreren optischen Knotenvorrichtungen umfasst; und
Senden, durch die Weiterleitungsvorrichtung (400), der Laufzeitdatendatei an das EMS (300).

5. Distributed Converged Cable Access Platform (D-CCAP), umfassend ein Elementverwaltungssystem EMS (300), eine Weiterleitungsvorrichtung (400) und einen Satz optischer Knotenvorrichtungen, wobei das EMS (300) Folgendes umfasst:
eine Verarbeitungseinheit (301), die dazu konfiguriert ist, einen Dienstkonfigurationsparameter für den Satz optischer Knotenvorrichtungen zu bestimmen, wobei der Satz optischer Knotenvorrichtungen mindestens zwei optische Knotenvorrichtungen umfasst; und
eine Sendeeinheit (302), die dazu konfiguriert ist, den Dienstkonfigurationsparameter für den Satz optischer Knotenvorrichtungen durch Einkapseln des Dienstkonfigurationsparameters in ein IP-Paket, Konfigurieren einer Ziel-IP-Adresse des IP-Pakets als IP-Adresse der Weiterleitungsvorrichtung (400) und Senden des IP-Pakets an die Weiterleitungsvorrichtung (400) an die Weiterleitungsvorrichtung (400) zu senden;
wobei die Weiterleitungsvorrichtung (400) für Folgendes konfiguriert ist:
Bestimmen, basierend auf einer Verbindungsbeziehung zwischen einem lokalen Port und jedem optischen Knotengerät, eines Zielports, der mit jedem der mindestens zwei optischen Knotenvorrichtungen verbunden ist; und
Senden des Dienstkonfigurationsparameters über den bestimmten Zielport, der mit dem optischen Knotengerät verbunden ist, an ein optisches Knotengerät.

6. D-CCAP nach Anspruch 5, wobei beim Bestimmen des Dienstkonfigurationsparameters für den Satz optischer Knotenvorrichtungen die Verarbeitungseinheit (301) des EMS (300) spezifisch für Folgendes konfiguriert ist:
Bestimmen des Satzes optischer Knotenvorrichtungen basierend auf einem Diensttyp, wobei jede optische Knotenvorrichtungen in dem Satz optischer Knotenvorrichtungen einen gleichen Diensttyp bereitstellt; und
Bestimmen des Dienstkonfigurationsparameters für den Satz optischer Knotenvorrichtungen basierend auf einer Dienstanforderung.

7. D-CCAP nach Anspruch 5 oder 6, wobei das EMS (300) ferner Folgendes umfasst:
eine Empfangseinheit, die für Folgendes konfiguriert ist:
Nach dem Senden, durch die Sendeeinheit (302), des Dienstkonfigurationsparameters für den Satz optischer Knotenvorrichtungen an die Weiterleitungsvorrichtung (400), Empfangen einer Laufzeitdatendatei, die von der Weiterleitungsvorrichtung (400) gesendet wird, wobei die Datendatei Laufzeitdaten mehrerer optischer Knotenvorrichtungen umfasst.

8. D-CCAP nach Anspruch 5 oder 6, wobei die Weiterleitungsvorrichtung (400) ferner für Folgendes konfiguriert ist:
nach dem Senden des Dienstkonfigurationsparameters an jede der mindestens zwei optischen Knotenvorrichtungen, Beschaffen von Laufzeitdaten von mehreren optischen Knotenvorrichtungen;
Erzeugen einer Laufzeitdatendatei, die die Laufzeitdaten der mehreren optischen Knotenvorrichtungen umfasst; und
Steuern der Sendeeinheit, um die Laufzeitdatendatei an das EMS (300) zu senden.

## Revendications

1. Procédé de configuration de paramètre de service sur la base d'une plateforme d'accès par câble convergente et distribuée, D-CCAP, comprenant : la détermination, par un système de gestion d'éléments, EMS (300), d'un paramètre de configuration de service pour un ensemble de dispositifs de nœud optique, dans lequel l'ensemble de dispositifs de nœud optique comprend au moins deux dispositifs de nœud optique ; l'envoi, par l'EMS (300), du paramètre de configuration de service pour l'ensemble de dispositifs de nœud optique à un dispositif de transfert (400) en encapsulant le paramètre de configuration de service dans un paquet IP, en configurant une adresse IP de destination du paquet IP comme adresse IP du dispositif de transfert (400) et en envoyant le paquet IP au dispositif de transfert (400) ; la détermination, par le dispositif de transfert (400) sur la base d'une relation de connexion entre un port local et chaque dispositif de nœud optique, d'un port cible connecté à chacun des au moins deux dispositifs de nœud optique ; et l'envoi, par le dispositif de transfert (400), du paramètre de configuration de service à chacun des au moins deux dispositifs de nœud optique par le biais du port cible déterminé connecté aux dispositifs de nœud optique.

2. Procédé selon la revendication 1, dans lequel la détermination, par un EMS (300), d'un paramètre de configuration de service pour un ensemble de dispositifs de nœud optique comprend : la détermination, par l'EMS (300), de l'ensemble de dispositifs de nœud optique sur la base d'un type de service, chaque dispositif de nœud optique dans l'ensemble de dispositifs de nœud optique fournissant un même type de service ; et la détermination, par l'EMS (300), du paramètre de configuration de service pour l'ensemble de dispositifs de nœud optique sur la base d'une exigence de service.

3. Procédé selon la revendication 1 ou 2, dans lequel après l'envoi, par l'EMS (300), du paramètre de configuration de service pour l'ensemble de dispositifs de nœud optique sur un dispositif de transfert (400), le procédé comprend en outre : la réception, par l'EMS (300), d'un fichier de données d'exécution envoyé par le dispositif de transfert (400), le fichier de données comprenant des données d'exécution issues d'une pluralité de dispositifs de nœud optique.

4. Procédé selon l'une quelconque des revendications 1 à 3, dans lequel après l'envoi, par le dispositif de transfert (400), du paramètre de configuration de service à chacun des au moins deux dispositifs de nœud optique, le procédé comprend en outre :
l'obtention, par le dispositif de transfert (400), des données d'exécution d'une pluralité de dispositifs de nœud optique ; la génération, par le dispositif de transfert (400), d'un fichier de données d'exécution comprenant les données d'exécution issues de la pluralité de dispositifs de nœud optique ; et l'envoi, par le dispositif de transfert (400), du fichier de données d'exécution à l'EMS (300).

5. Plateforme d'accès par câble convergente et distribuée, D-CCAP, comprenant un système de gestion d'éléments, EMS (300), un dispositif de transfert (400), et un ensemble de dispositifs de nœud optique, l'EMS (300) comprenant : une unité de traitement (301), configurée pour déterminer un paramètre de configuration de service pour l'ensemble de dispositifs de nœud optique, l'ensemble de dispositifs de nœud optique comprenant au moins deux dispositifs de nœud optique ; et une unité d'envoi (302), configurée pour envoyer le paramètre de configuration de service pour l'ensemble de dispositifs de nœud optique au dispositif de transfert (400) en encapsulant le paramètre de configuration de service dans un paquet IP, en configurant une adresse IP de destination du paquet IP comme adresse IP du dispositif de transfert (400) et en envoyant le paquet IP au dispositif de transfert (400) ; le dispositif de transfert (400) étant configuré pour : déterminer, sur la base d'une relation de connexion entre un port local et chaque dispositif de nœud optique, un port cible connecté à chacun des au moins deux dispositifs de nœud optique ; et envoyer le paramètre de configuration de service à un dispositif de nœud optique par le biais du port cible déterminé connecté au dispositif de nœud optique.

6. D-CCAP selon la revendication 5, dans laquelle lors de la détermination du paramètre de configuration de service pour l'ensemble de dispositifs de nœud optique, l'unité de traitement (301) de l'EMS (300) est plus particulièrement configurée pour : déterminer l'ensemble de dispositifs de nœud optique sur la base d'un type de service, dans lequel chaque dispositif de nœud optique dans l'ensemble de dispositifs de nœud optique fournit un même type de service ; et déterminer le paramètre de configuration de service pour l'ensemble de dispositifs de nœud optique en fonction d'une exigence de service.

7. D-CCAP selon la revendication 5 ou 6, l'EMS (300) comprenant en outre : une unité de réception, configurée pour : recevoir, après que l'unité d'envoi (302) a envoyé le paramètre de configuration de service pour l'ensemble de dispositifs de nœud optique au dispositif de transfert (400), un fichier de données d'exécution envoyé par le dispositif de transfert (400), le fichier de données comprenant des données d'exécution issues d'une pluralité de dispositifs de nœud optique.

8. D-CCAP selon la revendication 5 ou 6, dans laquelle le dispositif de transfert (400) est en outre configuré pour : obtenir, après l'envoi du paramètre de configuration de service à chacun des au moins deux dispositifs de nœud optique, des données d'exécution issues d'une pluralité de dispositifs de nœud optique ; générer un fichier de données d'exécution comprenant les données d'exécution issues de la pluralité de dispositifs de nœud optique ; et commander l'unité d'envoi pour envoyer le fichier de données d'exécution à l'EMS (300).
